# EUROPÄISCHE PATENTSCHRIFT

(11) **EP 3 706 972 B1**
(45) Veröffentlichungstag und Bekanntmachung des Hinweises auf die Patenterteilung: **16.08.2023**
(21) Anmeldenummer: 18800625.8
(22) Anmeldetag: 09.11.2018
(51) Int. Cl.: B28B 1/00, B28B 23/00, B28B 23/02, E04B 1/35, E04G 21/04, E04C 5/07, B33Y 70/00, B29C 64/106, E04C 3/20, B33Y 10/00

(54) **VERFAHREN ZUR HERSTELLUNG EINES BAUTEILS UND ENTSPRECHENDES BAUTEIL**
METHOD OF MANUFACTURING A CONSTRUCTION ELEMENT AND CORRESPONDING CONSTRUCTION ELEMENT
PROCÉDÉ DE FABRICATION D'UN ÉLÉMENT DE CONSTRUCTION ET ÉLÉMENT DE CONSTRUCTION CORRESPONDANT

(30) Priorität: 10.11.2017 DE 102017126343
(43) Veröffentlichungstag der Anmeldung: 16.09.2020
(73) Patentinhaber: PERI SE, 89264 Weißenhorn (DE)
(72) Erfinder: MAYER, Jürgen, 86489 Deisenhausen (DE)
(74) Vertreter: K & H Bonapat Patentanwälte Koch · von Behren & Partner mbB
(86) Internationale Anmeldenummer: PCT/EP2018/080754
(87) Internationale Veröffentlichungsnummer: WO 2019/092178

(56) Entgegenhaltungen:
- CN-A- 106 313 272
- US-A1- 2017 021 527
- US-A1- 2017 203 468

## Beschreibung

Die Erfindung betrifft ein Verfahren zur Herstellung eines Bauteils aus aushärtbarem Material nach dem Oberbegriff des Anspruchs 1 sowie ein entsprechendes Bauteil nach dem Oberbegriff des Anspruchs 7.

Auch in Industrieländern beruht die Herstellung von Bauwerken aus Beton noch größtenteils auf handwerklichen Leistungen. Prinzipiell können solche Bauwerke oder Teile dieser Bauwerke auf zwei verschiedene Weisen hergestellt werden. Zum Einen kann man vor Ort mit Schalungen arbeiten, welche dann mit sogenanntem Ortbeton ausgegossen werden, wobei bei tragenden Teilen zusätzlich Bewehrungen eingebracht werden können. Anschließend wird gewartet, bis der Beton teilweise oder vollständig ausgehärtet ist, worauf die Schalungen entfernt, gereinigt und dann wieder verwendet werden können. Das Verfahren ist zeitaufwendig und erfordert den Einsatz einer Vielzahl von Mitarbeitern an der Baustelle.

Eine andere Methode besteht darin, die Betonteile des Bauwerks vorher in einer Fabrik zu gießen, also als Fertigbauteile zu erstellen und als solche an die Baustelle zu liefern. Es können hier nicht nur Wände oder Bodenbestandteile, sondern ganze Raumzellen als Fertigteile aus Beton hergestellt und an die Baustelle geliefert werden. Dieses Verfahren ist preisgünstiger, hat jedoch einen hohen Standardisierungsgrad und eignet sich somit nur für die Herstellung einer Vielzahl von gleichen oder gleichartigen Bauwerken oder für sehr große Strukturen, welche eine Vielzahl gleicher Raumzellen benötigen. Eine individuelle Bauweise ist wiederum nur mit hohem Kostenaufwand möglich.

Ausgehend von diesen bekannten Techniken hat sich auch in der Herstellung von Bauwerken aus Beton in jüngster Zeit ein sogenanntes additives Herstellungsverfahren herausgebildet, nämlich das 3D-Drucken von Beton. Hierbei wird das Bauwerk an einem Computer entworfen und die Daten werden anschließend an einen Drucker weitergeleitet. Bei dem Drucker handelt es sich um einen vollautomatischen Portalroboter, der größer als das zu erstellende Gebäude bzw. Gebäudeteil ist. Anstelle von Portalrobotern können auch Mehrachs- oder Konsolroboter oder Mobilroboter eingesetzt werden. Dieser weist einen Druckkopf und Betonzuführungen auf, über welche der Ortbeton dem Druckkopf zugeführt wird. Dieser Druckkopf gießt sodann das zu erstellende Bauwerk bzw. dessen Wände in mehreren Lagen übereinander, wobei jede Lage eine Stärke zwischen 1 und 10 cm aufweist. Der verwendete Beton ist hierbei zähflüssig genug, um die Stabilität bis zum Aushärten, zumindest jedoch bis zum Anhärten zu halten. Auf diese Weise gießt der Druckkopf eine Wand in mehreren, übereinander angeordneten Lagen.

Problematisch ist bei der Erstellung von Bauwerken mittels 3D-Druckverfahren die Bewehrung der Wände. Es können prinzipiell fertige Stahlgerüste oder ähnliche Bewehrungselemente mit eingebracht werden, jedoch kann dies erst erfolgen, wenn die Wand zumindest teilweise gedruckt ist, da die Bewehrungselemente ansonsten die Bewegung des Druckkopfes stören bzw. verhindern würden. Wartet man allerdings ab, bis die Wand vollständig gedruckt ist, sind die unteren Lagen des Betons bereits ganz oder weitgehend ausgehärtet, sodass nachträglich keine Bewehrungselemente mehr eingebracht werden können.

Die CN 106313272 A beschreibt ein 3D-Druckverfahren zur Herstellung von Betonbauwerken, wobei der Beton mit Fasermaterialien bewehrt ist und wobei mit zwei Druckköpfen gearbeitet wird, von denen einer den Beton und der andere Stahlelemente druckt. Hierbei übergreifen die eingebrachten Stahlelemente jeweils zwei übereinander liegende Lagen des Betons und verbinden diese somit. Die CN 106313272 A offenbart ein Verfahren zur Herstellung eines Bauteils aus aushärtbarem Material nach dem Oberbegriff des Anspruchs 1 und ein Bauteil aus einem aushärtbaren Material nach dem Oberbegriff des Anspruchs 7.

Die WO 2005070657 A1 beschreibt ein Verfahren zur Herstellung einer Wand, wobei eine verlorene Schalung, ohne vertikale Bewehrungselemente, in einem 3D-Druckverfahren hergestellt wird. Die Bewehrungselemente werden in den Zwischenraum zwischen den beiden Außenschalungselementen eingebracht und mit Beton verfüllt.

Es besteht die Aufgabe, ein Verfahren zur Herstellung eines Bauteils aus aushärtbarem Material, insbesondere Beton, so auszubilden, dass seine Bewehrung hohen Belastungen stand hält und wobei die Bewehrung in einfacher Art und Weise in die zu bildenden Wände eingebracht werden kann.

Gelöst wird diese Aufgabe mit den kennzeichnenden Merkmalen des Anspruchs 1.

Ferner besteht die Aufgabe, ein entsprechendes Bauteil bereit zu stellen. Diese Aufgabe wird durch die kennzeichnenden Merkmale des Anspruchs 7 gelöst.

Einige Ausführungsbeispiele der Erfindung werden im Folgenden anhand der begleitenden Zeichnungen länger erläutert. Diese zeigen:
- **Figur 1:**: Einen Querschnitt durch ein teilweise erstelltes Bauteil nach dem erfindungsgemäßen Verfahren in einer ersten Variante (a) und einer zweiten Variante (b);
- **Figur 2:**: eine vergrößerte Darstellung benachbarter Bewehrungselemente mit schematisch gezeigter Kraftübertragung; und
- **Figur 3:**: eine Draufsicht auf die in Figur 2 dargestellten Bewehrungselemente entlang der Linie Y - Y mit schematisch dargestellter Kraftübertragung.

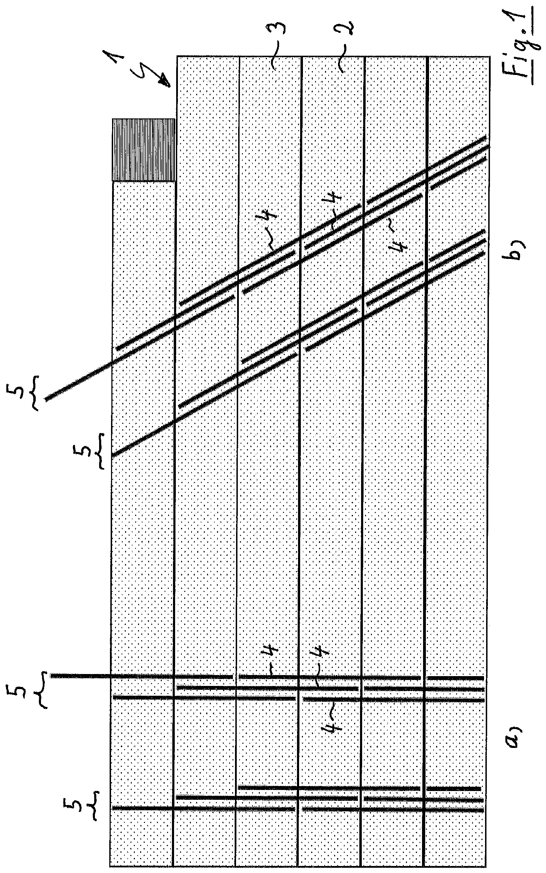

Zur Durchführung des erfindungsgemäßen Verfahrens wird - insoweit in an sich bekannter Weise - ein 3D-Drucker, z.B. in Gestalt eines vollautomatischen Portalroboters, verwendet, welcher eine Wandung oder eine vollständige Raumzelle oder weitere vertikale Einheiten eines Bauwerks in aufeinanderfolgenden Lagen drucken kann. In Figur 1 ist ein Bauteil im Entstehungsprozess dargestellt, welches aus mehreren übereinander gedruckten Lagen aus Beton besteht, wobei zwei mittlere Lagen beispielhaft mit den Bezugszahlen 2 und 3 versehen sind und wobei die oberste dargestellte Lage sich noch im Entstehungsprozess - also während des Druckvorgangs - befindet.

Figur 1 zeigt zwei Varianten der Einbringung von Bewehrungselementen 4 in die Lagen 2 bzw. 3 des Bauteils 1.

In beiden dargestellten Varianten wiederholen sich die folgenden Verfahrensschritte zyklisch bis zur Fertigstellung des Bauwerks. In einem ersten Verfahrensschritt wird jeweils eine Lage 2 bzw. 3 des aushärtbaren Materials, hier Beton, in einem 3D-Druckverfahren aufgebracht und in einem zweiten Verfahrensschritt werden mehrere, gleichartige Bewehrungselemente 4 in die Lagen 2 bzw. 3 eingebracht. Beide Verfahrensschritte werden bis zur Fertigstellung des Bauteils 1 zyklisch wiederholt. Jedes Bewehrungselement 4 besteht entweder aus einem starren Material, insbesondere Metall, z.B. Stahl, und kann in die noch nicht ausgehärteten Lagen 2 bzw. 3 des aushärtbaren Materials eingeschoben werden, nachdem diese gedruckt worden sind. Alternativ kann jedes Bewehrungselement 4 aus einem flexiblen Material, z.B. einem zugfesten Faden, z.B. aus Kevlar, bestehen und dann mithilfe eines Führungsstifts in die noch nicht ausgehärteten Lagen 2 bzw. 3 des aushärtbaren Materials eingeschoben werden.

Jedes Bewehrungselement 4 erstreckt sich hierbei über mindestens drei Lagen 2 bzw. 3 und die Bewehrungselemente 4 sind in Strängen 5 angeordnet, wobei jeder Strang durch alle Lagen 2 bzw. 3 etc. erstreckt. Jeder Strang 5 weist in jeder Lage 2 bzw. 3 mindestens drei Bewehrungselemente 4 auf. Im dargestellten Ausführungsbeispiel erstreckt sich jedes Bewehrungselement 4 über drei Lagen, wobei der Strang 5 dadurch gebildet wird, dass sich das benachbarte Bewehrungselement 4 über die und mittelbar darüberliegenden drei Lagen und das wiederum nächste Bewehrungselemente 4 sich über die noch weiter unmittelbar darüberliegenden drei Lagen erstreckt. Der Strang 5 von Bewehrungselementen 4 weist also in jeder Lage 2 bzw. 3 drei benachbarte Bewehrungselemente 4 auf.

In der in Figur 1 links dargestellten Variante (a) verlaufen die Stränge (5) aus dem Bewehrungselementen 4 senkrecht zu den Lagen 2 bzw. 3 und in der in Figur 1 rechts dargestellten Variante (b) verlaufen die Stränge 5 aus den Bewehrungselementen 4 in einem Winkel von ca. 60° zu den Lagen 2 bzw. 3. Andere Winkel, vorzugsweise zwischen 10° und 90°, sind möglich und je nach Anwendungsgebiet vorteilhaft.

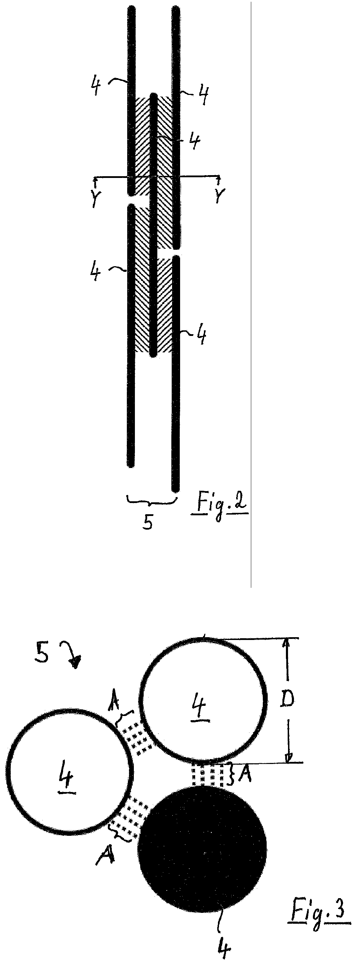

Die genaue Anordnung der einen Strang 5 bildenden Bewehrungselemente 4 zeigen die Figuren 2 und 3, wobei die Figur 3 ein Querschnitt durch die Linie Y-Y aus Figur 2 ist. In beiden Figuren ist schraffiert bzw. strichpunktiert der Kraftfluss zwischen benachbarten Bewehrungselementen 4 innerhalb eines Strangs 5 dargestellt. Der seitliche Abstand A benachbarter Bewehrungselemente 4 innerhalb eines Strangs 5 ist so gering wie möglich und nach der Erfindung deutlich geringer als der Durchmesser D jedes Bewehrungselements 4. Eine dichte Anordnung der Bewehrungselemente 4 innerhalb eines Strangs 5, wie in den Figuren 2 und 3 dargestellt, führt zu einem besseren Kraftfluss bzw. einer besseren Kraftübertragung durch den dazwischen liegenden Beton, wie es in den Figuren 2 und 3 schraffiert bzw. punktiert dargestellt ist.

Das erfindungsgemäße Verfahren kann sowohl mit starren Bewehrungselementen als auch mit flexiblen Bewehrungselementen ausgeführt werden, welche dann mithilfe eines Führungsstifts in die Lagen 2 bzw. 3 eingeschoben werden.

In einem alternativen, nicht dargestellten und nicht erfindungsgemäßen Beispiel können anstelle der stabförmigen Bewehrungselemente 4 auch längliche Schlaufen verwendet werden, welche sich über mehrere Lagen 2 bzw. 3 erstrecken. Auch diese Schlaufen können aus einem starren Material, z.B. Metall, oder einem flexiblen Material, z.B. Kevlar, bestehen und können sowohl senkrecht zu den Lagen 2 bzw. 3 als auch in einem Winkel zu den Lagen 2 bzw. 3, ähnlich wie in den Varianten (a) und (b) der Figur 1 eingebracht werden.

Das Verfahren eignet sich auch für andere aushärtende Materialien als Beton, insbesondere thixotrope Materialien.

Es gibt verschiedene Varianten bei der Vorgehensweise des Eindrückens der Bewehrungselemente 4. Einerseits können die Bewehrungselemente 4 vollständig in die darunterliegenden Lagen 2 bzw. 3 aus Beton eingedrückt werden, bevor die nächste Lage mit dem Druckkopf aufgebracht wird. In diesem Fall kann der Druckkopf ohne jegliche Behinderung durch herausstehende Bewehrungselemente die nächste Lage Beton aufbringen. Alternativ hierzu können die Bewehrungselemente nur durch die oberste Lage oder durch die beiden obersten Lagen oder durch mehrere obere Lagen Beton geführt werden, wobei dann ein Teil der Bewehrungselemente nach oben herausragt. In diesem Fall verwendet man vorzugsweise einen Druckkopf mit einer Aussparung für die herausstehenden Bewehrungselemente, um diese nicht zu beschädigen oder herauszureißen.

Eine alternative Vorgehensweise besteht darin, die Bewehrungselemente, falls sie aus der obersten Lage des Betons herausstehen, wenn die nächste Lage gedruckt wird, aus einem flexiblen, elastisch nachgiebigen Material zu fertigen. In diesem Falle können die Bewehrungselemente beim Überfahren durch den Druckkopf nachgeben und anschließend elastisch federnd wieder sich in ihre Ausgangsposition zurückbegeben. Ein geeignetes Material für entsprechende Bewehrungselemente ist beispielsweise Federstahl.

Das erfindungsgemäße Verfahren und das damit erstellte Bauteil haben den Vorteil einer wesentlich innigeren Verbindung der Bewehrungselemente und einer wesentlich festeren Bewehrung, da durch die Stränge 5 aus einzelnen Bewehrungselementen 4 eine ähnliche Wirkung erzielt werden kann, wie beim klassischen Betonguss durch Verwendung einer Stahlmatte. Durch die erfindungsgemäße Bildung von Strängen aus einzelnen Bewehrungselementen wird es möglich, auch im 3D-Druck, wo eine durchgängige Stahlmatte nicht eingesetzt werden kann, die gleichen oder ähnliche Festigkeitswerte zu erzielen wie bei der Verwendung durchgehender Baustahlmatten im Betongussverfahren.

## Patentansprüche

1. Verfahren zur Herstellung eines Bauteils (1) aus aushärtbarem Material, wobei in einem ersten Verfahrensschritt mindestens eine Lage (2, 3) des Materials in einem 3D-Druckverfahren gedruckt, in einem zweiten Verfahrensschritt mehrere gleichartige stabförmige Bewehrungselemente (4) in die Lage(n) (2, 3) eingebracht, und die beiden Verfahrensschritte bis zur Fertigstellung des Bauteils (1) zyklisch wiederholt werden, wobei die stabförmigen Bewehrungselemente (4) in Strängen (5) angeordnet sind, welche sich durch alle Lagen (2,3) erstrecken, **dadurch gekennzeichnet, dass** sich, mit Ausnahme der beiden untersten und obersten Lagen, jedes Bewehrungselement (4) über mindestens drei Lagen (2, 3) erstreckt, und die Stränge (5) in jeder Lage (2, 3) mindestens drei Bewehrungselemente (4) aufweisen, deren seitlicher Abstand (A) voneinander innerhalb eines Strangs (5) deutlich geringer ist als der Durchmesser (D) jedes Bewehrungselements (4).

2. Verfahren nach Anspruch 1, **dadurch gekennzeichnet, dass** das aushärtbare Material Beton ist.

3. Verfahren nach einem der voranstehenden Ansprüche, **dadurch gekennzeichnet, dass** die Bewehrungselemente (4) aus einem starren Material, insbesondere Metall, insbesondere Stahl bestehen und in die noch nicht ausgehärteten Lagen (2, 3) des aushärtbaren Materials eingeschoben werden.

4. Verfahren nach einem der Ansprüche 1 oder 2, **dadurch gekennzeichnet, dass** die Bewehrungselemente (4) aus einem flexiblen Material, z.B. einem zugfesten Faden, z.B. aus Kevlar, bestehen, und mit Hilfe eines Führungsstifts in die noch nicht ausgehärteten Lagen (2, 3) des aushärtbaren Materials eingedrückt werden.

5. Verfahren nach einem der vorstehenden Ansprüche, **dadurch gekennzeichnet, dass** die Stränge (5) senkrecht zu den Lagen (2, 3) verlaufen.

6. Verfahren nach einem der Ansprüche 1 bis 4, **dadurch gekennzeichnet, dass** die Stränge (5) in einem Winkel zwischen 90° und 45° zu den Lagen (2, 3) verlaufen.

7. Bauteil (1) aus einem aushärtbaren Material, welches eine Vielzahl von in einem 3D-Druckverfahren hergestellte Lagen (2, 3) sowie diese verbindende stabförmige Bewehrungselemente (4) aufweist, wobei die stabförmigen Bewehrungselemente (4) in Strängen (5) angeordnet sind, welche sich durch alle Lagen (2,3) erstrecken, **dadurch gekennzeichnet, dass** sich, mit Ausnahme der beiden untersten und obersten Lagen, jedes Bewehrungselement (4) über mindestens drei Lagen (2, 3) erstreckt, und die Stränge (5) in jeder Lage (2, 3) mindestens drei Bewehrungselemente (4) aufweisen, deren seitlicher Abstand (A) voneinander innerhalb eines Strangs (5) deutlich geringer ist als der Durchmesser (D) jedes Bewehrungselements (4).

8. Bauteil nach Anspruch 7, **dadurch gekennzeichnet, dass** das aushärtbare Material Beton ist.

9. Bauteil nach einem der Ansprüche 7 oder 8, **dadurch gekennzeichnet, dass** die Bewehrungselemente (4) aus einem starren Material, insbesondere Metall, insbesondere Stahl bestehen.

10. Bauteil nach einem der Ansprüche 7 oder 8, **dadurch gekennzeichnet, dass** die Bewehrungselemente (4) aus einem flexiblen Material, z.B. einem zugfesten Faden, z.B. aus Kevlar, bestehen.

11. Bauteil nach einem der Ansprüche 7 bis 10, **dadurch gekennzeichnet, dass** die Stränge (5) rechtwinklig zu den Lagen (2, 3) verlaufen.

12. Bauteil nach einem der Ansprüche 7 bis 10, **dadurch gekennzeichnet, dass** die Stränge (5) in einem Winkel zwischen 90° und 45° zu den Lagen (2, 3) verlaufen.

## Claims

1. Method for producing a component (1) from hardenable material, in a first step at least one layer (2, 3) of the material being printed in a 3D printing method, in a second step a plurality of similar bar-shaped reinforcement elements (4) being inserted into the layer(s) (2, 3), and the two method steps being cyclically repeated until the component (1) is complete, wherein the bar-shaped reinforcement elements (4) are arranged in strands (5) which extend through all the layers (2, 3), **characterized in that,** with the exception of the two lowermost and uppermost layers, each reinforcement element (4) extends over at least three layers (2, 3), and the strands (5) comprise at least three reinforcement elements (4) in each layer (2, 3), the lateral spacing (A) of which from one another within one strand (5) is considerably smaller than the diameter (D) of each reinforcement element (4).

2. Method according to claim 1, **characterized in that** the hardenable material is concrete.

3. Method according to any of the preceding claims, **characterized in that** the reinforcement elements (4) consist of a rigid material, in particular metal, in particular steel, and are inserted into the not yet hardened layers (2, 3) of the hardenable material.

4. Method according to any of claims 1 or 2, **characterized in that** the reinforcement elements (4) consist of a flexible material, e. g. a high-tensile fiber, e. g. made of Kevlar, and are inserted into the not yet hardened layers (2, 3) of the hardenable material by means of a guide pin.

5. Method according to any of the preceding claims, **characterized in that** the strands (5) extend perpendicularly to the layers (2, 3).

6. Method according to any of claims 1 to 4, **characterized in that** the strands (5) extend at an angle of between 90° and 45° relative to the layers (2, 3).

7. Component (1) made of hardenable material, which comprises a large number of layers (2, 3) produced in a 3D printing method as well as bar-shaped reinforcement elements (4) connecting said layers, wherein the bar-shaped reinforcement elements (4) are arranged in strands (5) which extend through all the layers (2, 3), **characterized in that,** with the exception of the two lowermost and uppermost layers, each reinforcement element (4) extends over at least three layers (2, 3), and the strands (5) comprise at least three reinforcement elements (4) in each layer (2, 3), the lateral spacing (A) of which from one another within one strand (5) is considerably smaller than the diameter (D) of each reinforcement element (4).

8. Component according to claim 7, **characterized in that** the hardenable material is concrete.

9. Component according to any of claims 7 or 8, **characterized in that** the reinforcement elements (4) consist of a rigid material, in particular metal, in particular steel.

10. Component according to any of claims 7 or 8, **characterized in that** the reinforcement elements (4) consist of a flexible material, e. g. a high-tensile fiber, e. g. made of Kevlar.

11. Component according to any of claims 7 to 10, **characterized in that** the strands (5) extend at right angles to the layers (2, 3).

12. Component according to any of claims 7 to 10, **characterized in that** the strands (5) extend at an angle of between 90° and 45° relative to the layers (2, 3).

## Revendications

1. Procédé de fabrication d'un élément de construction (1) en matériau durcissable, dans lequel, dans une première étape du procédé, au moins une couche (2, 3) du matériau est imprimée dans un procédé d'impression 3D, dans une deuxième étape du procédé, plusieurs éléments d'armature (4) en forme de barre de même type sont introduits dans la ou les couches (2, 3), et les deux étapes du procédé sont répétées de manière cyclique jusqu'à la finition de l'élément de construction (1), les éléments d'armature (4) en forme de barre étant disposés en faisceaux (5) qui s'étendent à travers toutes les couches (2, 3),
**caractérisé en ce que**, à l'exception des deux couches inférieure et supérieure, chaque élément d'armature (4) s'étend sur au moins trois couches (2, 3), et les faisceaux (5) présentent dans chaque couche (2, 3) au moins trois éléments d'armature (4) dont la distance latérale (A) entre eux à l'intérieur d'un faisceau (5) est nettement inférieure au diamètre (D) de chaque élément d'armature (4).

2. Procédé selon la revendication 1, **caractérisé en ce que** le matériau durcissable est du béton.

3. Procédé selon l'une des revendications précédentes, **caractérisé en ce que** les éléments d'armature (4) sont constitués d'un matériau rigide, en particulier de métal, en particulier d'acier, et sont insérés dans les couches (2, 3) non encore durcies du matériau durcissable.

4. Procédé selon l'une des revendications 1 ou 2, **caractérisé en ce que** les éléments d'armature (4) sont constitués d'un matériau flexible, par exemple d'un fil résistant à la traction, par exemple de Kevlar, et sont enfoncés dans les couches (2, 3) non encore durcies du matériau durcissable à l'aide d'une tige de guidage.

5. Procédé selon l'une des revendications précédentes, **caractérisé en ce que** les faisceaux (5) s'étendent perpendiculairement aux couches (2, 3).

6. Procédé selon l'une des revendications 1 à 4, **caractérisé en ce que** les faisceaux (5) s'étendent selon un angle compris entre 90° et 45° par rapport aux couches (2, 3).

7. Élément de construction (1) constitué d'un matériau durcissable, qui présente une pluralité de couches (2, 3) fabriquées par un procédé d'impression 3D ainsi que des éléments d'armature (4) en forme de barre reliant celles-ci, les éléments d'armature (4) en forme de barre étant disposés en faisceaux (5) qui s'étendent à travers toutes les couches (2, 3), **caractérisé en ce que**, à l'exception des deux couches inférieure et supérieure, chaque élément d'armature (4) s'étend sur au moins trois couches (2, 3), et les faisceaux (5) présentent dans chaque couche (2, 3) au moins trois éléments d'armature (4) dont la distance latérale (A) entre eux à l'intérieur d'un faisceau (5) est nettement inférieure au diamètre (D) de chaque élément d'armature (4).

8. Élément de construction selon la revendication 7, **caractérisé en ce que** le matériau durcissable est du béton.

9. Élément de construction selon l'une des revendications 7 ou 8, **caractérisé en ce que** les éléments d'armature (4) sont constitués d'un matériau rigide, en particulier de métal, en particulier d'acier.

10. Élément de construction selon l'une des revendications 7 ou 8, **caractérisé en ce que** les éléments d'armature (4) sont constitués d'un matériau flexible, par exemple d'un fil résistant à la traction, par exemple de Kevlar.

11. Élément de construction selon l'une des revendications 7 à 10, **caractérisé en ce que** les faisceaux (5) s'étendent perpendiculairement aux couches (2, 3).

12. Élément de construction selon l'une des revendications 7 à 10, **caractérisé en ce que** les faisceaux (5) s'étendent selon un angle compris entre 90° et 45° par rapport aux couches (2, 3).
